# EUROPÄISCHE PATENTSCHRIFT

(11) **EP 2 686 189 B1**
(45) Veröffentlichungstag und Bekanntmachung des Hinweises auf die Patenterteilung: **05.07.2017**
(21) Anmeldenummer: 12702246.5
(22) Anmeldetag: 01.02.2012
(51) Int. Cl.: B60K 7/00, B60K 17/04

(54) **ANTRIEBSVORRICHTUNG ZUM ANTREIBEN EINES RADES EINER FEDERBEINACHSE FÜR EIN ELEKTRISCH ANTREIBBARES FAHRZEUG**
DRIVE APPARATUS FOR DRIVING A WHEEL OF AN AXLE WITH SUSPENSION STRUT OF A ELECTRIC DRIVABLE VEHICLE
DISPOSITIF D'ENTRAÎNEMENT POUR L'ENTRAÎNEMENT D'UNE ROUE D'AXE À JAMBE DE SUSPENSION POUR UN VÉHICULE PROPULSABLE ÉLECTRIQUEMENT

(30) Priorität: 16.03.2011 DE 102011005623
(43) Veröffentlichungstag der Anmeldung: 22.01.2014
(73) Patentinhaber: ZF Friedrichshafen AG, 88046 Friedrichshafen (DE)
(72) Erfinder: MÜNSTER, Martin, 82140 Olching (DE); POLLMEYER, Stephan, 88046 Friedrichshafen (DE); HEIMANN, Jens, 88719 Stetten (DE)
(86) Internationale Anmeldenummer: PCT/EP2012/051641
(87) Internationale Veröffentlichungsnummer: WO 2012/123176

(56) Entgegenhaltungen:
- WO-A1-2011/003489
- DE-A1- 4 134 840
- JP-A- 2001 315 534
- US-A- 5 168 946

## Beschreibung

Die vorliegende Erfindung bezieht sich auf eine Antriebsvorrichtung zum Antreiben eines Rades einer Federbeinachse für ein elektrisch antreibbares Fahrzeug gemäß dem Oberbegriff des Patentanspruchs 1.

In der Regel entspricht die Anordnung des Antriebsstrangs bei elektrisch angetriebenen Fahrzeugen der Anordnung des Antriebsstrangs bei Fahrzeugen, welche einen Zentralantrieb, umfassend einen Verbrennungsmotor, aufweisen. Hierbei wird eine Antriebsvorrichtung, umfassend eine elektrische Maschine, ein Getriebe und ein Differenzial karosseriefest in der Fahrzeugmitte zwischen den Vorder- oder Hinterrädern angeordnet; das Abtriebsmoment wird wie bei konventionellen Zentralantrieben über Seitenwellen auf die angetriebenen Räder übertragen. Bei einer derartigen Anordnung des Antriebsstrangs bleibt das Fahrwerkkonzept weitestgehend erhalten, wobei lediglich Modifikationen der Aggregatelagerung und des Hilfsrahmens erforderlich sind.

Bei elektrisch angetriebenen bzw. antreibbaren Fahrzeugen, umfassend einen Zentralantrieb stellt die Batterieunterbringung einen erheblichen Eingriff in die Fahrzeugstruktur dar. Hierbei ist bekannt, die Batterie in den Unterboden, beispielsweise unter der Rücksitzbank oder im Bereich, der bei Zentralantrieben mit einem Verbrennungsmotor vom Getriebetunnel eingenommen wurde, zu integrieren.

Auch sind im Stand der Technik radnahe elektrische Antriebe bekannt, wobei unter radnahen Antrieben im weiteren Antriebe verstanden werden, welche pro Antriebsrad des Fahrzeugs ein oder mehrere Elektromotoren vorsehen. So sind Fahrzeuge mit zwei oder mehreren Antriebsrädern bekannt, die eine entsprechende Anzahl an Antrieben, also zwei oder mehrere, aufweisen. Dabei kann jeweils ein Elektromotor auf genau ein Antriebsrad wirken.

Des Weiteren sind aus dem Stand der Technik radnahe elektrische Antriebe zum Antreiben eines Rades einer angetriebenen Achse für elektrisch antreibbare Fahrzeuge bekannt, die in das Fahrwerk des Fahrzeugs integriert sind, wobei in Abhängigkeit von der Anzahl der angetriebenen Fahrzeugachsen beispielsweise zwei oder vier elektrische Antriebe vorgesehen sind.

Hierbei können die elektrischen Antriebe radträgerfest angeordnet sein; in diesem Fall federt der elektrische Antrieb unmittelbar mit dem jeweiligen Rad mit und die ungefederte Masse wird durch den Antrieb direkt beeinflusst.

Eine weitere Möglichkeit der Anordnung der radnahen elektrischen Antriebe besteht darin, diese aufbaufest anzuordnen. Hierbei rücken die elektrischen Antriebe aus der Fahrzeugmitte heraus hin zu den Rädern. Sie sind dabei am Aufbau befestigt und beeinflussen somit die ungefederten Massen nicht.

Ferner können die elektrischen Antriebe lenkerfest angeordnet sein, wobei sie in diesem Fall an den Fahrwerkslenkern, beispielsweise am Verbundlenker befestigt sind. Durch diese Konzeption wird die ungefederte Masse reduziert, indem die elektrischen Antriebe nahe am aufbaufesten Lenkeranbindungspunkt angeordnet werden.

Radnahe Antriebe können bei Fahrzeugen mit Allrad-, Front-, oder Heckantrieb vorgesehen sein, wobei die Achstypen der angetriebenen Fahrzeugachsen konventionelle Achstypen, wie z.B. Federbein- oder Doppelquerlenkerachstypen sein können. Ferner können radnahe Antriebe in radintegrierte Fahrwerke integriert sein.

Des Weiteren können die radnahen elektrischen Antriebe ein Getriebe aufweisen.

Aus der WO 2008/017945 A1 ist eine in ein Fahrzeugrad integrierbare Antriebsvorrichtung zum Antreiben des Rades bekannt, welche einen Elektromotor und eine Getriebeeinheit aufweist, wobei die Getriebeeinheit ein Stirnradgetriebe und ein Planetengetriebe aufweist, die in Reihe geschaltet sind. Hierbei ist das Planetengetriebe in Kraftflussrichtung im Zugbetrieb betrachtet abtriebsseitig des Stirnradgetriebes angeordnet.

In vorteilhafter Weise resultiert die Verwendung von radnahen elektrischen Antrieben zum Antreiben eines Rades einer angetriebenen Achse beim Fahrzeugaufbau in einer hohen Flexibilität, da sich durch den Entfall des zentralen Antriebs in der Fahrzeugmitte neue Freiheitsgrade bei der Fahrzeuggestaltung, insbesondere bei der Gestaltung des Fahrzeuginnenraums, der Batterieunterbringung und der Crash-Sicherheit ergeben.

Zudem können durch radnahe elektrische Antriebe radindividuelle Antriebsmomente erzeugt werden, wodurch Funktionen wie Torque Vectoring, ESP, ABS, ASR etc. auf einfache Weise realisiert werden können. Durch die schnelle und genauere Regelbarkeit von elektrischen Antrieben können diese Funktionen im Vergleich zu herkömmlichen bremsenbasierten Regelsystemen optimiert werden. Das Dokument JP 2001315534 beschreibt eine gattungsbildende Antribsvorrichtung. Der vorliegenden Erfindung liegt die Aufgabe zugrunde, eine Antriebsvorrichtung zum Antreiben eines Rades einer Federbeinachse für ein elektrisch antreibbares Fahrzeug anzugeben.

Diese Aufgabe wird durch die Merkmale des Patentanspruchs 1 gelöst. Weitere erfindungsgemäße Ausgestaltungen und Vorteile gehen aus den Unteransprüchen hervor. Demnach wird eine Antriebsvorrichtung gemäss Anspruch 1 vorgeschlagen. Das Planetengetriebe ist koaxial zum Rotor der elektrischen Maschine angeordnet, wobei das Stirnradgetriebe achsparallel zum Rotor der elektrischen Maschine angeordnet ist. Die Antriebsvorrichtung ist achsparallel zur Radachse angeordnet.

Der durch diese Konzeption entstehende Achsversatz wird vorzugsweise genutzt, um die Antriebsvorrichtung in Vorwärtsfahrrichtung betrachtet vor der Radmitte, d.h. an der der Spurstange abgewandten Seite der vertikalen Radmittelebene anzuordnen, was die Integration in enge Bauräume ermöglicht; eine Anordnung der Antriebsvorrichtung in Vorwärtsfahrrichtung betrachtet hinter der Radmitte ist ebenfalls möglich, wenn ausreichend Abstand zur Spurstange besteht und der Bremssattel in einer zur vertikalen Radmittelebene gespiegelten Position angeordnet ist.

Durch die Kombination eines Planetengetriebes mit einem Stirnradgetriebe wird eine große Übersetzung ermöglicht, wobei die Abmessungen sowie das Gewicht der elektrischen Maschine und somit die ungefederte Masse gering gehalten werden können; beispielsweise kann die durch die zwei Getriebe erzielbare Übersetzung, also das Verhältnis zwischen der Umdrehungsgeschwindigkeit der Eingangswelle der beiden Getriebe bezogen auf die Umdrehungsgeschwindigkeit der Ausgangswelle der beiden Getriebe einen Wert annehmen, der größer als 10 ist. Vorzugsweise nimmt die Übersetzung den Wert 16 an. Hierbei kann die Aufteilung der erzielbaren Übersetzung auf die Getriebe symmetrisch oder asymmetrisch erfolgen.

In vorteilhafter Weise ergibt die Kombination eines niedrigen Antriebsmomentes mit einer hohen Drehzahlausnutzung in Summe in Verbindung mit den zwei Planetengetrieben der Antriebsvorrichtung ein hohes Leistungs-/Gewichtsverhältnis (kW/kg). Die elektrische Maschine kann dadurch klein dimensioniert sein, was in vorteilhafter Weise die Integration der elektrischen Maschine in den Radträger ermöglicht bzw. vereinfacht.

Ein Gehäuse der Antriebsvorrichtung kann als Radträger oder als Teil des Radträgers dienen und auftretende Kräfte in das Fahrwerk einleiten.

Vorzugsweise ist die Anordnung der elektrischen Maschine und der Getriebeeinheit derart, dass in der überwiegenden Betriebslage des Fahrzeugs der Schmierstoff selbsttätig unter Einwirkung der Schwerkraft aus der elektrischen Maschine in den Ölsumpf im Getrieberaum zurückfließt, wobei zu diesem Zweck das Gehäuse der elektrischen Maschine derart ausgestaltet ist, dass eine ausreichende Schmierung der Lager der Rotorwelle gewährleistet ist. Dies resultiert in dem Vorteil, dass die Notwendigkeit des Vorsehens berührender oder nicht berührender Dichtungen, insbesondere bei schnelldrehenden Wellen der Antriebsvorrichtung entfällt, wodurch Schmierstoffverluste und Wärmeentwicklung reduziert werden.

Im Rahmen einer Weiterbildung der Erfindung wird vorgeschlagen, ein Gehäuse der Antriebsvorrichtung direkt mit dem Radträger der Federbeinachse zu verbinden, beispielsweise zu verschrauben, als mehrteiliges Schweißbauteil in den Radträger zu integrieren oder mit dem Radträger einteilig auszuführen.

Im Rahmen einer weiteren Ausgestaltung können die elektrische Maschine und das Planetengetriebe ein gemeinsames Gehäuse aufweisen.

Zudem können die Anbindung des Bremssattels für den Fall einer Scheibenbremse und/oder des Dämpfers und/oder der Feder in ein Gehäuse der Antriebsvorrichtung integriert sein, wobei die Verbindungsschrauben zur Fixierung des Bremssattels gleichzeitig Gehäuseschrauben für die Befestigung der Antriebsvorrichtung am Längslenker der Achse darstellen können.

Auf diese Weise wird eine kompakte Bauweise erzielt und es entfällt die Notwendigkeit separater Bauteile, was in einer Reduzierung der Kosten resultiert.

Die Erfindung wird im Folgenden anhand der beigefügten Figuren beispielhaft näher erläutert, wobei für gleiche Bauteile dieselben Bezugszeichen verwendet werden. Es zeigen:
- Figur 1:: Eine schematische Schnittansicht einer Ausführungsform einer erfindungsgemäßen Antriebsvorrichtung für ein elektrisch antreibbares Fahrzeug und der Anordnung der Antriebsvorrichtung; und
- Figur 2:: Eine Schnittansicht der Anordnung einer erfindungsgemäßen Antriebsvorrichtung.

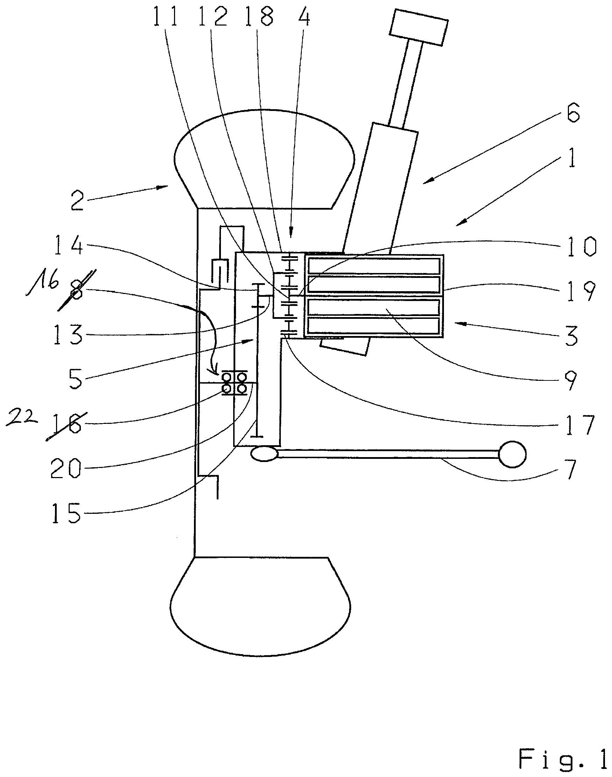

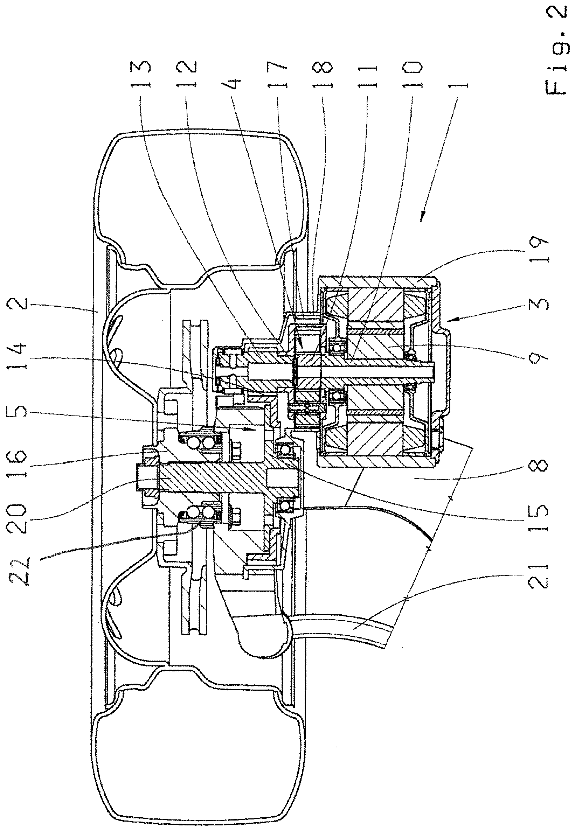

Bezugnehmend auf Figur 1 und Figur 2 umfasst eine Antriebsvorrichtung 1 zum Antreiben eines Rades 2 einer Federbeinachse eines elektrisch antreibbaren Fahrzeugs eine elektrische Maschine 3 und eine Getriebeeinheit, umfassend ein Stirnradgetriebe 5 und ein Planetengetriebe 4, die in Kraftflussrichtung im Zugbetrieb betrachtet abtriebsseitig der elektrischen Maschine 3 in der Reihenfolge Planetengetriebe 4 - Stirnradgetriebe 5 angeordnet sind. Das Planetengetriebe 4 und das Stirnradgetriebe 5 sind bei dem gezeigten Beispiel axial betrachtet an der dem Rad 2 zugewandten Seite der elektrischen Maschine 3 angeordnet.

In Figur 1 ist der Dämpfer der Federbeinachse mit dem Bezugszeichen 6 versehen, wobei mit 7 der Querlenker und mit 8 der Radträger bezeichnet sind. Ferner ist in Figur 2 die Spurstange mit dem Bezugszeichen 21 versehen.

Bei dem gezeigten Beispiel ist der Rotor 9 der als Innenläufer ausgeführten elektrischen Maschine 3 über eine Sonnenradwelle 10 mit dem Sonnenrad 11 des Planetengetriebes 4 verbunden, wobei der Steg 12 des Planetengetriebes 4 über eine Stegwelle 13 mit dem Ritzel 14 (d.h. mit dem kleinen Zahnrad) des Stirnradgetriebes 5 verbunden ist, das mit dem Stirnrad 15 (d.h. mit dem großen Zahnrad) kämmt.

Hierbei ist das Stirnrad 15 mit der Radnabe 16 des Rades 2 vorzugsweise mittels einer steckbaren Keilwellenverbindung oder eines Polygonprofils verbunden oder mit der Radnabe 16 einteilig ausgeführt, wodurch die Montage- und Herstellungskosten reduziert werden. Die Verbindung zwischen der Stegwelle 13 und dem Ritzel 14 ist vorzugsweise axial und radial durch Wälzlager, Gleitlager oder Anlaufscheiben abgestützt.

Desweiteren ist das Hohlrad 17 des Planetengetriebes 4 gehäusefest angeordnet; es kann an das Gehäuse 18 des Planetengetriebes 4 gekoppelt, einstückig mit dem Gehäuse 18 ausgeführt oder in das Gehäuse 18 eingepresst sein. Für den Fall, dass das Hohlrad 17 einstückig mit dem Gehäuse 18 ausgeführt ist, kann ein radialer Absatz vorgesehen sein, um einen Durchmesserunterschied zwischen dem Gehäuse 18 und dem Hohlrad 17 auszugleichen.

Durch die Ausgestaltung des Hohlrades 17 als in ein zylindrisches Gehäuse einpressbarer Hohlradring kann in Abhängigkeit der Belastung der Werkstoff gewählt werden, wobei dies in einer Reduzierung des Gewichts resultieren kann. Ferner können das Planetengetriebe 4 und die elektrische Maschine 3 ein gemeinsames Gehäuse aufweisen. Bei dem gezeigten Beispiel ist das Gehäuse der elektrischen Maschine 3 mit dem Bezugszeichen 19 versehen.

Ferner kann die Rotorwelle 9 der elektrischen Maschine 3 einstückig mit der Sonnenradwelle ausgeführt sein; die Stegwelle 13 kann zudem einstückig mit dem Ritzel 14 ausgeführt sein.

Im Rahmen weiterer, nicht dargestellter Ausführungsformen können der Antrieb und/oder der Abtrieb des Planetengetriebes 4 über jeweils ein weiteres Element des Planetengetriebes 4 erfolgen.

Die Verzahnungen sind vorzugsweise schrägverzahnt ausgeführt, wobei die Lagerung der Sonnenradwelle 10 des Planetengetriebes 4 durch die antriebsseitige Lagerung des Rotors 9 der elektrischen Maschine 3 gebildet wird, so dass die Notwendigkeit separater Lager entfällt, wobei die dem Sonnenrad 11 des Planetengetriebes 4 abgewandte Lagerung des Rotors 9 der elektrischen Maschine 3 vorzugsweise durch ein Federelement axial vorgespannt sein kann.

Hierbei ist der Schrägungswinkel des Sonnenrades 11 des Planetengetriebes 4 vorzugsweise entgegengesetzt zum Schrägungswinkel des Ritzels 14 des Stirnradgetriebes 5. Zudem sind in vorteilhafter Weise die Richtungen der Schrägungswinkel des Sonnenrades 11 des Planetengetriebes 4 und des Ritzels 14 des Stirnradgetriebes 5 so zu wählen, dass die Belastungen auf die Lager der Antriebsvorrichtung 1 minimiert werden. Dadurch werden die Reibungsverluste minimiert und es wird eine kleinere Dimensionierung der Lager ermöglicht. In vorteilhafter Weise können Höhe und Vorzeichen des Schrägungswinkels des Stirnrades 15 derart gewählt werden, dass die Lasten durch ein herkömmliches Radlager aufgenommen werden können.

Ferner wird die Lagerung des Abtriebs 20 der Antriebsvorrichtung 1, d.h. einer mit dem Stirnrad 15 verbundenen Welle 20, durch das Radlager des Rades 2 gebildet, welches als Lager üblicher Bauart, beispielsweise als zweireihiges Kugellager oder als Lager umfassend zwei Einzelschrägkugellager mit einem Druckwinkel zwischen 15° und 60 ° ausgeführt sein kann. Dadurch kann in vorteilhafter Weise die Lageranzahl der Antriebsvorrichtung reduziert werden.

Erfindungsgemäß ist ein Gehäuse der Antriebsvorrichtung 1, insbesondere für den Fall einer Ausführung gemäß Figuren 1 und 2 das Gehäuse 19 der elektrischen Maschine 4 direkt mit dem Radträger 8 der Federbeinachse 1 verbunden, vorzugsweise verschraubt. Alternativ kann das Gehäuse 19 der elektrischen Maschine 3 als mehrteiliges Schweißbauteil in den Radträger 8 integriert werden oder mit dem Radträger 8 einteilig ausgeführt sein. Ferner kann die elektrische Maschine 3 wie eine Patrone in den Radträger 8 eingefügt werden, der in diesem Fall als Gesamtgehäuse dient.

Im Rahmen einer Weiterbildung der Erfindung sind die Anbindung des Bremssattels für den Fall einer Scheibenbremse und/oder des Dämpfers 6 und/oder der Feder in ein Gehäuse der Antriebsvorrichtung 1, insbesondere für den Fall einer Ausführung gemäß Figuren 1 und 2 in das Gehäuse 19 der elektrischen Maschine 3 integriert, wobei die Verbindungsschrauben zur Fixierung des Bremssattels gleichzeitig Gehäuseschrauben für die Befestigung der Antriebsvorrichtung 11 am Radträger 8 der Achse darstellen können.

Auf diese Weise wird eine kompakte Bauweise erzielt und es entfällt die Notwendigkeit separater Bauteile, was in einer Reduzierung der Kosten resultiert.

Im Rahmen einer nicht dargestellten Ausführungsform der Erfindung, kann die elektrische Maschine 3 als Hohlwellenmotor, d.h. als Innenläufer mit einem als Hohlwelle ausgeführten Rotor 9 ausgeführt sein, wobei das Planetengetriebe 4 an der dem Rad 2 abgewandten Seite der elektrischen Maschine 3 angeordnet ist, das Stirnradgetriebe 5 an der dem Rad 2 zugewandten Seite der elektrischen Maschine 3 angeordnet ist und die Stegwelle 13 des Planetengetriebes 4 durch den Hohlraum des Rotors 9 der elektrischen Maschine 3 zum Ritzel 14 des Stirnradgetriebes 5 geführt wird. Bei einer derartigen Ausführungsform kann beispielsweise das Gehäuse 18 des Planetengetriebes 4 direkt mit dem Radträger 8 der Federbeinachse verbunden sein.

Durch die Vertauschung der Anordnung der elektrischen Maschine 3 und des Planetengetriebes 4 im Vergleich zu dem Ausführungsbeispiel nach Figuren 1 und 2 wird der Vorteil erzielt, dass im Bereich des Karosserielängsträgers Bauraum zur Verfügung gestellt wird, der beim Einfedern genutzt wird, da das Gehäuse 18 des Planetengetriebes 4 mit kleinerem Außendurchmesser ausführbar ist als das Gehäuse 19 der elektrischen Maschine 3.

Die elektrische Maschine 3 der Antriebsvorrichtung 1 kann als Asynchronmaschine, als fremderregt- oder permanentmagnet-erregte Synchronmaschine oder als Querfeldmaschine ausgeführt werden, was eine hohe Flexibilität bietet.

Durch die erfindungsgemäße Konzeption kann bei einer geringen ungefederten Masse und hohem Leistungs-/Gewichtsverhältnis (kW/kg) eine sehr kompakte Bauweise der Antriebsvorrichtung realisiert werden.

Die hier vorgestellte Antriebsvorrichtung kann auch mit beliebigen Achstypen, beispielsweise mit einer Zentrallenker-, Schwertlenker-, Mehrlenker-, Federbein- (mit oder ohne aufgelöster unterer Lenkerebenen) oder Trapezlenkerachse kombiniert werden.

Des Weiteren weist die Antriebsvorrichtung eine geringe Lageranzahl und eine gute Zugänglichkeit auf, wobei sie mit geringer Modifikation einer bestehenden Fahrzeugachse in die Achse integriert werden kann

Ferner kann die Bremsvorrichtung der Räder als Scheibenbremse oder Trommelbremse ausgeführt sein; die Antriebsvorrichtung kann luftgekühlt oder fluidgekühlt ausgeführt sein, wobei die elektrische Maschine, die Planetengetriebe und die Leistungselektronik eine gemeinsame Kühlung aufweisen können.

### Bezugszeichen

- 1: Antriebsvorrichtung
- 2: Rad
- 3: elektrische Maschine
- 4: Planetengetriebe
- 5: Stirnradgetriebe
- 6: Dämpfer
- 7: Querlenker
- 8: Radträger
- 9: Rotor
- 10: Sonnenradwelle des Planetengetriebes 4
- 11: Sonnenrad des Planetengetriebes 4
- 12: Steg des Planetengetriebes 4
- 13: Stegwelle des Planetengetriebes 4
- 14: Ritzel
- 15: Stirnrad
- 16: Radnabe
- 17: Hohlrad des Planetengetriebes 4
- 18: Gehäuse des Planetengetriebes 4
- 19: Gehäuse der elektrischen Maschine 3
- 20: Abtrieb der Antriebsvorrichtung 1
- 21: Spurstange

## Patentansprüche

1. Antriebsvorrichtung (1) zum Antreiben eines Rades (2) einer Federbeinachse für ein elektrisch antreibbares Fahrzeug, umfassend eine elektrische Maschine (3) und eine Getriebeeinheit, wobei die Getriebeeinheit ein Stirnradgetriebe (5) und ein Planetengetriebe (4) aufweist, die in Kraftflussrichtung im Zugbetrieb betrachtet abtriebsseitig der elektrischen Maschine (3) in der Reihenfolge Planetengetriebe (4) - Stirnradgetriebe (5) angeordnet sind, wobei der Rotor (9) der als Innenläufer ausgeführten elektrischen Maschine (3) über eine Sonnenradwelle (10) mit dem Sonnenrad (11) des Planetengetriebes (4) verbunden ist, wobei der Steg (12) des Planetengetriebes (4) über eine Stegwelle (13) mit dem Ritzel (14) des Stirnradgetriebes (5) verbunden ist, welches mit dem Stirnrad (15) kämmt, welches mit der Radnabe (16) des Rades (2) verbunden oder mit der Radnabe (16) einteilig ausgeführt ist und wobei das Hohlrad (17) des Planetengetriebes (4) gehäusefest angeordnet ist, und wobei die Lagerung des Abtriebs (20) der Antriebsvorrichtung (1) durch das Radlager (22) des Rades (2) gebildet wird, wobei ein Gehäuse (18, 19) der Antriebsvorrichtung (1) direkt an einem Radträger (8) der Federbeinachse befestigt ist, **dadurch gekennzeichnet, dass** die Antriebsvorrichtung (1) oder deren vorwiegender Teil bezogen auf die Radmitte gegenüberliegend der Spurstangen (21) der Federbeinachse angeordnet ist.

2. Antriebsvorrichtung (1) zum Antreiben eines Rades (2) einer Federbeinachse für ein elektrisch antreibbares Fahrzeug, nach Anspruch 1, **dadurch gekennzeichnet, dass** der Rotor (9) der elektrischen Maschine (3) einstückig mit der Sonnenradwelle (10) ausgeführt ist und/oder dass die Stegwelle (13) einstückig mit dem Ritzel (14) ausgeführt ist.

3. Antriebsvorrichtung (1) zum Antreiben eines Rades (2) einer Federbeinachse für ein elektrisch antreibbares Fahrzeug, nach Anspruch 1 oder 2, **dadurch gekennzeichnet, dass** das Planetengetriebe (4) und das Stirnradgetriebe (5) axial betrachtet an der dem Rad (2) zugewandten Seite der elektrischen Maschine (3) angeordnet sind.

4. Antriebsvorrichtung (1) zum Antreiben eines Rades (2) einer Federbeinachse für ein elektrisch antreibbares Fahrzeug, nach Anspruch 1 oder 2, **dadurch gekennzeichnet, dass** das Planetengetriebe (4) an der dem Rad (2) abgewandten Seite der elektrischen Maschine (3) angeordnet ist und dass das Stirnradgetriebe (5) an der dem Rad (2) zugewandten Seite der elektrischen Maschine (3) angeordnet ist, wobei die elektrische Maschine (3) als Innenläufer mit einem als Hohlwelle ausgeführten Rotor (9) ausgeführt ist und die Stegwelle (13) des Planetengetriebes (4) durch den Hohlraum des Rotors (9) der elektrischen Maschine (3) zum Ritzel (14) des Stirnradgetriebes (5) geführt wird.

5. Antriebsvorrichtung (1) zum Antreiben eines Rades (2) einer Federbeinachse für ein elektrisch antreibbares Fahrzeug, nach einem der vorangehenden Ansprüche, **dadurch gekennzeichnet, dass** das Gehäuse (18, 19) mit dem Radträger (8) verschraubt, als mehrteiliges Schweißbauteil in den Radträger (8) integriert oder mit dem Radträger (8) einteilig ausgeführt ist.

6. Antriebsvorrichtung (1) zum Antreiben eines Rades (2) einer Federbeinachse für ein elektrisch antreibbares Fahrzeug, nach einem der vorangehenden Ansprüche, **dadurch gekennzeichnet, dass** die Anbindung des Bremssattels für den Fall einer Scheibenbremse und/oder des Dämpfers (6) und/oder der Feder in ein Gehäuse (18, 19) der Antriebsvorrichtung (1) integriert sind.

7. Antriebsvorrichtung (1) zum Antreiben eines Rades (2) einer Federbeinachse für ein elektrisch antreibbares Fahrzeug, nach Anspruch 6, **dadurch gekennzeichnet, dass** die Verbindungsschrauben zur Fixierung des Bremssattels gleichzeitig Gehäuseschrauben für die Befestigung der Antriebsvorrichtung (1) am Radträger (8) der Federbeinachse (1) darstellen.

8. Antriebsvorrichtung (1) zum Antreiben eines Rades (2) einer Federbeinachse für ein elektrisch antreibbares Fahrzeug, nach mindestens einem der vorhergehenden Ansprüche, **dadurch gekennzeichnet, dass** die elektrische Maschine hochdrehend ist, insbesondere eine maximale Drehzahl größer 5000 Umdrehungen/min , bevorzugt zwischen 6000 und 10000 Umdrehungen/min, besonders bevorzugt um 7000 Umdrehungen/min aufweist und/oder das Verhältnis der Umdrehungsgeschwindigkeit der Abtriebswelle der elektrischen Maschine bezogen auf die Umdrehungsgeschwindigkeit der Radwelle größer als 10 ist, bevorzugt zwischen 14 und 17, insbesondere um 16 .

9. Antriebsvorrichtung (1) zum Antreiben eines Rades (2) einer Federbeinachse für ein elektrisch antreibbares Fahrzeug, nach mindestens einem der vorhergehenden Ansprüche, **dadurch gekennzeichnet, dass** die Antriebsvorrichtung oder deren vorwiegender Teil in der vorwiegenden Fahrtrichtung des Fahrzeugs vor der Radmitte angeordnet ist.

10. Antriebsvorrichtung (1) zum Antreiben eines Rades (2) einer Federbeinachse für ein elektrisch antreibbares Fahrzeug, nach mindestens einem der vorhergehenden Ansprüche 1 bis 8, **dadurch gekennzeichnet, dass** die Antriebsvorrichtung (1) oder deren vorwiegender Teil in der vorwiegenden Fahrtrichtung des Fahrzeugs hinter der Radmitte angeordnet ist.

## Claims

1. Drive apparatus (1) for driving a wheel (2) of a spring strut-type axle for a vehicle which can be driven electrically, comprising an electric machine (3) and a transmission unit, the transmission unit having a spur gear mechanism (5) and a planetary gear mechanism (4) which are arranged in the sequence planetary gear mechanism (4) - spur gear mechanism (5) on the output side of the electric machine (3) as viewed in the power flow direction in the traction mode, the rotor (9) of the electric machine (3) which is configured as an internal rotor being connected to the sun gear (11) of the planetary gear mechanism (4) via a sun gear shaft (10), the spider (12) of the planetary gear mechanism (4) being connected via a spider shaft (13) to the pinion (14) of the spur gear mechanism (5) which meshes with the spur gear (5) which is configured so as to be connected to the wheel hub (16) of the wheel (2) or is configured in one piece with the wheel hub (16), and the internal gear (17) of the planetary gear mechanism (4) being arranged fixedly on the housing, and the mounting of the output (20) of the drive apparatus (1) being formed by way of the wheel bearing (22) of the wheel (2), a housing (18, 19) of the drive apparatus (1) being fastened directly to a wheel support (8) of the spring strut-type axle, **characterized in that** the drive apparatus (1) or the predominant part thereof in relation to the wheel centre is arranged so as to lie opposite the track rods (21) of the spring strut-type axle.

2. Drive apparatus (1) for driving a wheel (2) of a spring strut-type axle for a vehicle which can be driven electrically, according to Claim 1, **characterized in that** the rotor (9) of the electric machine (3) is configured in one piece with the sun gear shaft (10), and/or **in that** the spider shaft (13) is configured in one piece with the pinion (14).

3. Drive apparatus (1) for driving a wheel (2) of a spring strut-type axle for a vehicle which can be driven electrically, according to Claim 1 or 2, **characterized in that** the planetary gear mechanism (4) and the spur gear mechanism (5) are arranged on that side of the electric machine (3) which faces the wheel (2), as viewed axially.

4. Drive apparatus (1) for driving a wheel (2) of a spring strut-type axle for a vehicle which can be driven electrically, according to Claim 1 or 2, **characterized in that** the planetary gear mechanism (4) is arranged on that side of the electric machine (3) which faces away from the wheel (2), and **in that** the spur gear mechanism (5) is arranged on that side of the electric machine (3) which faces the wheel (2), the electric machine (3) being configured as an internal rotor with a rotor (9) which is configured as a hollow shaft, and the spider shaft (13) of the planetary gear mechanism (4) being guided through the cavity of the rotor (9) of the electric machine (3) to the pinion (14) of the spur gear mechanism (5).

5. Drive apparatus (1) for driving a wheel (2) of a spring strut-type axle for a vehicle which can be driven electrically, according to one of the preceding claims, **characterized in that** the housing (18, 19) is screwed to the wheel support (8), is integrated into the wheel support (8) as a multiple-piece welded component, or is configured in one piece with the wheel support (8).

6. Drive apparatus (1) for driving a wheel (2) of a spring strut-type axle for a vehicle which can be driven electrically, according to one of the preceding claims, **characterized in that** the attachment of the brake calliper in the case of a disc brake and/or of the damper (6) and/or of the spring is integrated into a housing (18, 19) of the drive apparatus (1).

7. Drive apparatus (1) for driving a wheel (2) of a spring strut-type axle for a vehicle which can be driven electrically, according to Claim 6, **characterized in that** the connecting bolts for fixing the brake calliper at the same time represent housing bolts for fastening the drive apparatus (1) to the wheel support (8) of the spring strut-type axle (1).

8. Drive apparatus (1) for driving a wheel (2) of a spring strut-type axle for a vehicle which can be driven electrically, according to at least one of the preceding claims, **characterized in that** the electric machine is high-speed, in particular has a maximum rotational speed of greater than 5000 rpm, preferably of between 6000 and 10,000 rpm, particularly preferably of about 7000 rpm, and/or the ratio of the rotational speed of the output shaft of the electric machine to the rotational speed of the wheel shaft is greater than 10, preferably between 14 and 17, in particular about 16.

9. Drive apparatus (1) for driving a wheel (2) of a spring strut-type axle for a vehicle which can be driven electrically, according to at least one of the preceding claims, **characterized in that** the drive apparatus or the predominant part thereof in the predominant driving direction of the vehicle is arranged in front of the wheel centre.

10. Drive apparatus (1) for driving a wheel (2) of a spring strut-type axle for a vehicle which can be driven electrically, according to at least one of the preceding Claims 1 to 8, **characterized in that** the drive apparatus (1) or the predominant part thereof in the predominant driving direction of the vehicle is arranged behind the wheel centre.

## Revendications

1. Dispositif d'entraînement (1) pour l'entraînement d'une roue (2) d'un axe de jambe de force à ressort pour un véhicule à entraînement électrique, comprenant une machine électrique (3) et une unité de transmission, l'unité de transmission présentant une transmission à pignon droit (5) et une transmission planétaire (4) qui sont disposées, vu dans le sens du flux de forces en mode de traction, du côté de la sortie de la machine électrique (3) dans l'ordre suivant : transmission planétaire (4) - transmission à pignon droit (5), le rotor (9) de la machine électrique (3) réalisée sous forme d'induit intérieur étant connecté par le biais d'un arbre de roue solaire (10) à la roue solaire (11) de la transmission planétaire (4), le porte-satellites (12) de la transmission planétaire (4) étant connecté par le biais d'un arbre de porte-satellites (13) au pignon (14) de la transmission à pignon droit (5) qui s'engrène avec le pignon droit (15) qui est connecté au moyeu de roue (16) de la roue (2) ou qui est réalisé d'une seule pièce avec le moyeu de roue (16), et la couronne dentée (17) de l'engrenage de la transmission planétaire (4) étant disposée de manière fixée au boîtier, et le support sur palier de la prise de force (20) du dispositif d'entraînement (1) étant formé par le palier de roue (22) de la roue (2), un boîtier (18, 19) du dispositif d'entraînement (1) étant fixé directement à un support de roue (8) de l'axe de jambe de force à ressort, **caractérisé en ce que** le dispositif d'entraînement (1) ou la majeure partie de celui-ci est disposé par rapport au centre de la roue à l'opposé des barres d'accouplement (21) de l'axe de jambe de force à ressort.

2. Dispositif d'entraînement (1) pour l'entraînement d'une roue (2) d'un axe de jambe de force à ressort pour un véhicule à entraînement électrique, selon la revendication 1, **caractérisé en ce que** le rotor (9) de la machine électrique (3) est réalisé d'une seule pièce avec l'arbre de roue solaire (10) et/ou **en ce que** l'arbre de porte-satellites (13) est réalisé d'une seule pièce avec le pignon (14).

3. Dispositif d'entraînement (1) pour l'entraînement d'une roue (2) d'un axe de jambe de force à ressort pour un véhicule à entraînement électrique, selon la revendication 1 ou 2, **caractérisé en ce que** la transmission planétaire (4) et la transmission à pignon droit (5), considérées axialement, sont disposées du côté de la machine électrique (3) tourné vers la roue (2).

4. Dispositif d'entraînement (1) pour l'entraînement d'une roue (2) d'un axe de jambe de force à ressort pour un véhicule à entraînement électrique, selon la revendication 1 ou 2, **caractérisé en ce que** la transmission planétaire (4) est disposée au niveau du côté de la machine électrique (3) opposé à la roue (2) et **en ce que** la transmission à pignon droit (5) est disposée au niveau du côté de la machine électrique (3) tourné vers la roue (2), la machine électrique (3) étant réalisée sous forme d'induit intérieur avec un rotor (9) réalisé sous forme d'arbre creux, et l'arbre de porte-satellites (13) de la transmission planétaire (4) étant guidé à travers la cavité du rotor (9) de la machine électrique (3) vers le pignon (14) de la transmission à pignon droit (5).

5. Dispositif d'entraînement (1) pour l'entraînement d'une roue (2) d'un axe de jambe de force à ressort pour un véhicule à entraînement électrique, selon l'une quelconque des revendications précédentes, **caractérisé en ce que** le boîtier (18, 19) est vissé au support de roue (8), est intégré dans le support de roue (8) en tant que composant soudé en plusieurs parties ou est réalisé d'une seule pièce avec le support de roue (8).

6. Dispositif d'entraînement (1) pour l'entraînement d'une roue (2) d'un axe de jambe de force à ressort pour un véhicule à entraînement électrique, selon l'une quelconque des revendications précédentes, **caractérisé en ce que** la liaison de l'étrier de frein, dans le cas d'un frein à disques, et/ou de l'amortisseur (6) et/ou du ressort, sont intégrées dans un boîtier (18, 19) du dispositif d'entraînement (1).

7. Dispositif d'entraînement (1) pour l'entraînement d'une roue (2) d'un axe de jambe de force à ressort pour un véhicule à entraînement électrique, selon la revendication 6, **caractérisé en ce que** les vis de connexion pour la fixation de l'étrier de frein constituent simultanément des vis de boîtier pour la fixation du dispositif d'entraînement (1) au support de roue (8) de l'axe de jambe de force à ressort (1).

8. Dispositif d'entraînement (1) pour l'entraînement d'une roue (2) d'un axe de jambe de force à ressort pour un véhicule à entraînement électrique selon au moins l'une quelconque des revendications précédentes, **caractérisé en ce que** la machine électrique tourne à grande vitesse, en particulier présente une vitesse de rotation maximale supérieure à 5000 tr/m, de préférence comprise entre 6000 et 10000 tr/m, particulièrement préférablement d'environ 7000 tr/m et/ou le rapport de la vitesse de rotation de l'arbre de prise de force de la machine électrique par rapport à la vitesse de rotation de l'arbre de roue est supérieur à 10, de préférence est compris entre 14 et 17, en particulier est de 16.

9. Dispositif d'entraînement (1) pour l'entraînement d'une roue (2) d'un axe de jambe de force à ressort pour un véhicule à entraînement électrique selon au moins l'une quelconque des revendications précédentes, **caractérisé en ce que** le dispositif d'entraînement ou la majeure partie de celui-ci est disposé dans la direction de conduite principale du véhicule avant le centre de la roue.

10. Dispositif d'entraînement (1) pour l'entraînement d'une roue (2) d'un axe de jambe de force à ressort pour un véhicule à entraînement électrique selon au moins l'une quelconque des revendications précédentes 1 à 8, **caractérisé en ce que** le dispositif d'entraînement (1) ou la majeure partie de celui-ci est disposé dans la direction de conduite principale du véhicule derrière le centre de la roue.
